# EUROPEAN PATENT SPECIFICATION

(11) **EP 3 046 163 B1**
(45) Date of publication and mention of the grant of the patent: **22.07.2020**
(21) Application number: 14844748.5
(22) Date of filing: 08.09.2014
(51) Int. Cl.: H01M 2/16, H01M 2/14, H01M 10/0525, H01M 2/34

(54) **SEPARATOR FOR SECONDARY CELL, AND SECONDARY CELL**
SEPARATOR FÜR SEKUNDÄRZELLE UND SEKUNDÄRZELLE
SÉPARATEUR POUR ACCUMULATEUR ÉLECTRIQUE, ET ACCUMULATEUR ÉLECTRIQUE

(30) Priority: 10.09.2013 JP 2013186964; 28.02.2014 JP 2014038202
(43) Date of publication of application: 20.07.2016
(73) Proprietor: Toray Industries, Inc., Tokyo 103-8666 (JP)
(72) Inventor: KAI, Nobuyasu, Otsu-shi Shiga 520-8558 (JP); ITO, Kiyohiko, Otsu-shi Shiga 520-8558 (JP); MATSUDA, Naoki, Nagoya-shi Aichi 455-8502 (JP)
(74) Representative: Kador & Partner PartG mbB
(86) International application number: PCT/JP2014/073637
(87) International publication number: WO 2015/037552

(56) References cited:
- EP-A1- 2 308 674
- WO-A1-2013/080946
- JP-A- 2010 092 718
- JP-A- 2010 092 718
- JP-A- 2010 219 037
- JP-A- 2013 020 769
- JP-A- 2014 044 826
- JP-A- 2014 175 055
- JP-A- 2014 182 875
- US-A1- 2002 055 036
- US-B2- 7 311 994

## Description

### TECHNICAL FIELD

The present invention relates to a secondary battery separator and a secondary battery.

### BACKGROUND ART

Secondary batteries such as lithium ion batteries are widely used in portable digital devices such as mobile phones, notebook computers, digital cameras, digital video cameras and portable game machines. In recent years, these secondary batteries have been increasingly used as power sources for hybrid cars, electric cars, plug-in hybrid cars and so on in automobile applications.

A lithium ion battery generally has a configuration in which a secondary battery separator and an electrolyte are interposed between a positive electrode with a positive active material stacked on a positive electrode current collector and a negative electrode with a negative active material stacked on a negative electrode current collector.

For the secondary battery separator, a polyolefin-based porous base material is used, and required characteristics include a characteristic in which the separator contains an electrolyte solution in a porous structure, so that ion movement is possible, and a characteristic in which if abnormal heat generation occurs in a lithium ion battery, the material is melted by heat to close the porous structure, so that ion movement is stopped to stop power generation.

However, with an increase in capacity and power of lithium ion batteries in recent years, not only the above-mentioned characteristics but also adhesiveness with an electrode for preventing deterioration of cycle performance due to generation of gaps between the electrode and the secondary battery separator in repetition of charge-discharge has been required. With widespread use of secondary batteries, it has been required to reduce production costs, and it has been thus required to provide secondary battery separators at a low price.

For these requirements, Patent Documents 1 and 2 propose a secondary battery separator in which a porous layer mainly composed of a vinylidene fluoride-based resin having adhesiveness is stacked on a porous base material composed of a polyolefin, so that adhesiveness with an electrode is improved.

On the other hand, with an increase in capacity and power of lithium ion batteries in recent years, not only the above-mentioned characteristics but also excellent load characteristics and safety, and hence improvement of heat resistance have been required.

For these requirements, Patent Document 3 proposes that heat-resistant fine particles are stacked on a porous base material, and Patent Document 4 proposes that in addition to heat-resistant fine particles, swellable fine particles are stacked on a porous base material.
Patent Document 5 discloses a separator for a non-aqueous electrolyte cell comprising a heat-resistant porous layer on at least one side of a resin porous membrane. The heat-resistant porous layer comprises heat-resistant microparticles, a binder, and expandable microparticles that expand in the non-aqueous electrolyte as a result of increased absorption of the non-aqueous electrolyte when heated. The binder is a polymer which has groups having a cyclic structure comprising amide bonds and a skeleton derived from polymerizable double bonds and has a glass transition temperature of 130°C or higher and a weight-average molecular weight of 350,000 or greater. The heat-resistant porous layer thickness is between 2 and 10 µm. Patent Document 6 discloses a secondary battery separator including a porous base material and a porous layer stacked on at least one surface of the porous base material and the porous layer comprises a fluororesin. The porous layer is formed by dissolving a polyvinylidene fluoride resin in a polar amide solvent, applying the solution onto a substrate, then immersing the resin in a coagulation liquid to solidify the resin, washing with water and drying.

### PRIOR ART DOCUMENTS

### PATENT DOCUMENTS

Patent Document 1: Japanese Patent Laid-open Publication No. 2004-146190
Patent Document 2: Japanese Patent Laid-open Publication No. 2012-221741
Patent Document 3: Japanese Patent Laid-open Publication No. 2010-15917
Patent Document 4: Japanese Patent Laid-open Publication No. 2012-48932
Patent Document 5: WO 2013/080946 A1
Patent Document 6: Japanese Patent Laid-open Publication No. 2013-20769

### SUMMARY OF THE INVENTION

### PROBLEMS TO BE SOLVED BY THE INVENTION

However, in Patent Documents 1 and 2, adhesiveness with en electrode is improved, but it is proposed as a production method that a release film or a porous base material is coated with an organic resin dissolved in an organic solvent, and is immersed in a coagulation tank to form a porous layer, and this production method is a high-cost production method, and thus cannot satisfy the current requirement of reducing costs.

Accordingly, in view of the above-mentioned problems, an object of the present invention is to provide a secondary battery separator which exhibits adhesiveness with an electrode at a low cost.

### SOLUTIONS TO THE PROBLEMS

Thus, the present inventors have extensively conducted studies while paying attention to a method in which organic resin fine particles are stacked to form a porous layer.

Here, Patent Document 3 describes an example of organic resin fine particles as heat-resistant fine particles, but actually only inorganic resin fine particles are stacked on a porous base material, and present inventors have supposed that the original purpose of the technique is improvement of heat resistance, and due to a large stacked film thickness and a large average particle size of fine particles, sufficient adhesiveness is not exhibited.

Here, Patent Document 4 describes an example in which in addition to heat-resistant fine particles, swellable fine particles that are organic resin fine particles are stacked on a porous base material, and present inventors have supposed that the purpose of the technique is improvement of heat resistance, and due to a large stacked film thickness and a large average particle size of fine particles, sufficient adhesiveness is not exhibited.

In this way, the present inventors have found that control of the thickness of a porous layer and control of the average particle size of organic resin fine particles are important, and studies have been further conducted to find that when they each fall within a specific range, a remarkable effect is exhibited. It has been heretofore difficult to control the average particle size of organic resin fine particles to fall within a specific range, so that a porous layer has an optimum thickness, but the present inventors have extensively conducted studies on a method for controlling the average particle size of organic resin fine particles, and resultantly found out an optimum method.

For solving the above-mentioned problems, the secondary battery separator of the present invention has a constitution as defined by the appended claims.

### EFFECTS OF THE INVENTION

According to the present invention, specific organic resin fine particles are used to increase the contact area with an electrode and reduce the thickness, and therefore adhesiveness with a conventional electrode can be further improved, so that the cycle performance of a secondary battery can be improved. By using the secondary battery separator of the present invention, a lithium ion battery having a high capacity and a high power can be provided at a low cost.

### EMBODIMENTS OF THE INVENTION

The secondary battery separator of the present invention is a secondary battery separator including: a porous base material; and a porous layer stacked on at least one surface of the porous base material and containing organic resin fine particles having an average particle size of 0.02 µm or more and less than 0.40 µm, the porous layer having a thickness of 0.10 µm or more and less than 2.5 µm, characterized in that the porous layer stacked on at least one surface of the porous base material contains the organic resin fine particles containing a fluororesin, the fluororesin having a weight average molecular weight of 600,000 or more and 1,500,000 or less. Hereinafter, the present invention will be described in detail.

### [Porous layer]

### (Organic resin fine particles)

It is required that an organic resin contained in organic resin fine particles that form a porous layer according to the present invention have electrical insulating quality, and be stable to a nonaqueous electrolyte, and so electrochemically stable that it is hardly oxidized and reduced when used in a secondary battery. The organic resin that satisfies these requirements includes resins which are fluororesins, and these fluororesins may be used alone, or may be used in combination of two or more thereof. A fluororesin is used because of excellent electric stability and
oxidation resistance and high swellability in an electrolyte solution.

Examples of the fluororesin to be used include homopolymer-based fluororesins such as polyvinylidene fluoride, polytetrafluoroethylene, polyvinyl fluoride and polychlorotrifluoroethylene; and copolymer-based fluororesins such as ethylene-tetrafluoroethylene polymers and ethylene-chlorotrifluoroethylene polymers. Examples of the fluororesin also include copolymers of homopolymer-based fluororesins and tetrafluoroethylene, hexafluoropropylene, trifluoroethylene and the like. Among these fluororesins, a vinylidene fluoride resin, particularly a resin composed of a copolymer of vinylidene fluoride and hexafluoropropylene is suitably used from the viewpoint of electric stability and oxidation resistance.

The weight average molecular weight of the fluororesin is 600,000 or more and 1,500,000 or less. The weight average molecular weight of the fluororesin is preferably 800,000 or more and 1,200,000 or less. When the weight average molecular weight is less than 600,000, adhesiveness with an electrode is exhibited, but the strength thereof is low, and therefore delamination may easily occur. When the weight average molecular weight is more than 1,500,000, adhesiveness
may become low because swellability in an electrolyte solution is reduced.

Preferably, the fluororesin is acid-modified for improving adhesiveness with an electrode. Examples of the acid to be used for acid modification include acrylic acid, methacrylic acid, crotonic acid, maleic acid, fumaric acid, itaconic acid and citraconic acid, and the fluororesin may be acid-modified with one or two or more of these acids.

The average particle size of the organic resin fine particles is 0.02 µm or more and less than 0. 40 µm. The average particle size of the organic resin fine particles is more preferably 0.05 µm or more and less than 0.35 µm. The average particle size of the organic resin fine particles is further preferably 0..08 µm or more and less than 0.15 µm. When the average particle size is less than 0.02 µm, organic resin fine particles may be densely stacked to significantly increase the air permeability. When the average particle size is 0.40 µm or more, sufficient adhesiveness may not be obtained because the contact area with an electrode decreases. The average particle size here is one determined by measuring the length of one side of a square or the long side (major axis diameter) of a rectangle that fully surrounds an organic resin fine particle observed by microscopic observation of the surface of the porous layer, and calculating the number average thereof as described in examples. The measurement method will be described in detail later.

Examples of the shape of the organic resin fine particles include a spherical shape, a tabular shape, an acicular shape, a rod shape and an elliptic shape, and the organic resin fine particles may have any of these shapes. Among them, a spherical shape and a tabular shape are especially preferable from the viewpoint of dispersibility, coatability and porous formation. The aspect ratio of the organic resin fine particle is preferably 100 or less, more preferably 50 or less, further preferably 30 or less. When the aspect ratio is more than 100, the handling characteristics of organic resin fine particles may be deteriorated. Here, the aspect ratio is a value determined by drawing a square or rectangle that fully surrounds a particle on an image of the particle obtained with an electronic microscope, and dividing the long side (major axis diameter) of the rectangle by the short side (minor axis diameter) of the short side of the rectangle. When a square is drawn, the aspect ratio is 1.

As a method for producing the organic resin fine particles, a known method such as emulsification polymerization, suspension polymerization, and dispersion polymerization can be used. Processing may be further performed for ensuring that organic resin fine particles obtained by the production method has a desired average particle size and shape. Examples thereof include a coagulation method, a phase separation method, a dry grinding method, a wet grinding method and a spray dryer method.

Examples of the coagulation method include a method in which an organic resin is dissolved in a solvent, and the organic resin solution is added to a poor solvent to precipitate organic resin fine particles.

For example, when the organic resin is a fluororesin, a solvent to be used for dissolving the fluororesin may be a solvent which can dissolve a fluororesin and mix with water.

Specifically, the solvent is at least one selected from N-alkyl pyrrolidones such as N-methyl-2-pyrrolidone (hereinafter, sometimes abbreviated as NMP); ureas such as 1,3-dimethyl-2-imidazolidinone (hereinafter, sometimes abbreviated as DMI); chain amide-based solvents such as N,N-dimethylacetamide (hereinafter, sometimes abbreviated as DMAc) and N,N-dimethylformamide (hereinafter, sometimes abbreviated as DMF) ; sulfur oxide-based polar solvents such as dimethyl sulfoxide (hereinafter, sometimes abbreviated as DMSO), dimethyl sulfone and tetramethylene sulfone; ketone-based solvents such as acetone and methyl ethyl ketone; and nitrile-based solvents such as acetonitrile and propionitrile. Among them, NMP, DMI, acetone, methyl ethyl ketone and acetonitrile are preferable, and NMP and acetonitrile are more preferable from the viewpoint of stability of a solvent and ease of handling on an industrial scale.

Preferably, the atmosphere of a dissolver has a low oxygen gas concentration for suppressing decomposition and degradation of a fluororesin, and carrying out operations with safety, and it is preferable to place the dissolver under an inert gas atmosphere. Examples of the inert gas include nitrogen gas, carbon dioxide gas, helium gas and argon gas, but in view of economy and availability, nitrogen gas, argon gas and carbon dioxide gas are preferable, and nitrogen gas or argon gas is especially preferably used.

The dissolution method is not particularly limited, but when a fluororesin solution is to be prepared, a fluororesin, a solvent and water are added in a predetermined vessel, and the fluororesin is dissolved with stirring. In the case where the fluororesin is not dissolved at normal temperature, it is heated, and thereby dissolved.

The fluororesin may be dissolved in a solvent, followed by adding water. In the case where water is added after the fluororesin is dissolved, a fluororesin solution is prepared in a predetermined vessel, and water is then added to the fluororesin solution. A liquid delivery pump, a Komagome pipet or the like can be used for addition of water, and it is preferable to slowly add water because when a large amount of water is added at a time, the fluororesin is precipitated, and it takes much time to dissolve the fluororesin. For producing fluororesin fine particles uniform in particle size, it is preferable that the fluororesin is fully dissolved in a solvent, and the resulting solution is then added or flash-crystallized to a poor solvent to precipitate fluororesin fine particles, and an undissolved fluororesin may exist.

The amount of water added varies depending on the concentration of the fluororesin to be dissolved, and the type of solvent, but it is preferably 1% by mass or more and 25% by mass or less based on 100% of the total of the solvent and water. When the amount of water is excessively small, deformed particles may be generated, and when the amount of water is excessively large, the fluororesin may be precipitated.

The dissolution temperature varies depending on the type of solvent to be used, and the concentration of the fluororesin, but it is normally normal temperature to 200°C, preferably normal temperature to 100°C, or equal to or higher than the boiling point of the solvent.

The dissolution time varies depending on the type of solvent, the concentration of the fluororesin and the dissolution temperature, but it is normally in the range of 5 minutes to 50 hours, preferably in the range of 10 minutes to 40 hours.

When the concentration of the fluororesin is high, fluororesin fine particles having a small particle size or fluororesin fine particles uniform in particle size may not be obtained because fusion etc. of fluororesin fine particles occurs at the time of adding a fluororesin solution to a poor solvent to precipitate fluororesin fine particles.

Therefore, the amount of the fluororesin in the fluororesin solution when it is added to a poor solvent for the fluororesin is normally 0.1 parts by mass or more and 15 parts by mass or less, preferably 0.5 parts by mass or more and 10 parts by mass or less based on 100 parts by mass of the solvent, or 100 parts by mass of the total of the solvent and water when water is added.

When the content of the fluororesin is in the above-mentioned range, the fluororesin solution is applicable to industrial production. In this embodiment, the fluororesin is dissolved in the solvent, and the fluororesin solution is subjected to a precipitation step.

The precipitation step is the following step a1 or step a2 in particular.
(Step a1): adding a fluororesin solution to a poor solvent to precipitate fluororesin fine particles.
(Step a2) : flash-crystallizing a fluororesin solution to a poor solvent to precipitate fluororesin fine particles.
In the step a1, a fluororesin solution is added to a poor solvent for fluororesin particles to precipitate fluororesin fine particles.

For adding the fluororesin solution to a poor solvent for the fluororesin, the fluororesin solution may be injected continuously or added dropwise from a vessel containing the fluororesin solution to a vessel containing the poor solvent for the fluororesin (hereinafter, sometimes referred to as a "reception tank"). The fluororesin solution may be added from above the poor solvent through a gas phase, but it is preferable to add the fluororesin solution directly into the poor solvent from the viewpoint of obtaining particles that are minute and uniform in particle size.

Methods for preparing fluororesin particles by bringing a fluororesin and a poor solvent into contact with each other include two methods : a method in which a particle-forming liquid is prepared by adding a fluororesin solution in a reception tank containing a poor solvent, and the particle-forming liquid is then discharged, and subjected to a next step (batch method); and a continuous flow method (sometimes referred to simply as a continuous method). Reactors to be used in the continuous flow method include a continuous stirred tank reactor (abbreviated name: CSTR) and a plug flow reactor (abbreviated name: PFR). Either of the reactors is applicable for forming the fluororesin into particles.

The method using a CSTR is a method in which a poor solvent is added in a reception tank (sometimes referred to as a reactor in the continuous method), a fluororesin solution is added thereto to prepare fluororesin particles, and subsequently, the fluororesin solution and the poor solvent are simultaneously added dropwise to the resulting particle-forming liquid while a fluororesin particle-forming liquid is continuously discharged from the reception tank, so that particles are formed continuously. A particle-forming liquid can also be prepared by simultaneously adding a fluororesin solution and a poor solvent dropwise to a fluororesin particle-forming liquid prepared by a batch method while continuously discharging the fluororesin particle-forming liquid from a reception tank.

When a CSTR is used, it is preferable to add a fluororesin solution and a poor solvent simultaneously. The ratio of the dropwise addition rate of the fluororesin solution to the dropwise addition rate of the poor solvent is not particularly limited as long as fluororesin particles can be generated, but the ratio of the dropwise addition rate of the poor solvent to the dropwise addition rate of the fluororesin solution is preferably 0.1 to 100, more preferably 0.2 to 50.

Where the ratio of the mass of a particle-forming liquid in a reception tank (reactor) to the flow rate at which the particle-forming liquid is discharged from the reception tank is a retention time, the retention time is not particularly limited as long as particles that are minute and uniform in particle size are obtained, but the retention time is preferably 1 second to 10 hours, more preferably 1 minute to 1 hour.

A mixing device may be installed in the reception tank for retaining uniformity of the particle-forming liquid. The mixing device may be, for example, a stirring blade, a twin-screw mixer, a homogenizer or an ultraviolet wave irradiator.

The method using a PFR is a method in which a fluororesin solution and a poor solvent are fed into a tube at a constant rate, the fluororesin and the poor solvent are mixed to form particles in the tube, and a particle-forming liquid is continuously taken out. Various tubes can be used in this method. For example, two tubes can be used, where a fluororesin solution is fed into an inner tube, a poor solvent is fed into an outer tube, and the fluororesin solution and the poor solvent are mixed to form particles in the outer tube. The fluororesin may be fed into the outer tube, while the poor solvent is fed into the inner tube.

When particles are formed continuously using one tube, e.g. a T-shaped tube, a poor solvent can be fed in a direction at 90 degrees to the flow of a fluororesin solution, so that the fluororesin solution and the poor solution come into contact with each other to form particles.

The method using a PFR is not limited to the method described above because particles can be formed continuously by mixing a fluororesin solution and a poor solvent using various tubes.

When a PFR is used, the fluororesin solution feeding rate and the poor solvent feeding rate are not particularly limited as long as fluororesin particles can be generated, but from the viewpoint of productivity, the ratio of the fluororesin solution feeding rate to the poor solvent feeding rate is preferably 0.1 to 100, more preferably 0.2 to 50.

The section in which the fluororesin solution and the poor solvent are mixed may be a tube alone, or a tubular mixing device may be installed. Examples of the tubular mixing device may include the above-mentioned mixing devices, and tubular mixing devices containing a static mixing structure such as a static mixer.

The time for mixing the fluororesin solution and the poor solvent may be in the same range as that of the above-mentioned retention time. The inner diameter of the tube is not particularly limited as long as the fluororesin solution and the poor solvent can be mixed, but from the viewpoint of productivity, the inner diameter of the tube is preferably 0.1 mm to 1 m, more preferably 1 mm to 1 m.

When two tubes: an inner tube and an outer tube are used, the ratio of the inner tube diameter and the outer tube diameter is not particularly limited as long as a particle-forming liquid can be prepared, but the ratio of outer tube diameter/inner tube diameter is preferably 1.1 to 500, more preferably 1.1 to 100.

Examples of the poor solvent for fluororesin fine particles include aliphatic hydrocarbon-based solvents such as pentane, hexane, heptane, octane, nonane and decane; aromatic hydrocarbon-based solvents such as benzene, toluene, o-xylene, m-xylene, p-xylene and naphthalene; ester-based solvents such as ethyl acetate, methyl acetate, butyl acetate and butyl propionate; ether-based solvents such as diethyl ether, diisopropyl ether, tetrahydrofuran and dioxane; alcohol-based solvents such as methanol, ethanol, 1-propanol and 2-propanol; and water. Alcohol-based solvents such as methanol, ethanol, 1-propanol or 2-propanol, water and so on are preferable, and methanol, ethanol and water are especially preferable.

For uniformly dispersing fluororesin fine particles in the poor solvent, the poor solvent for the fluororesin is preferably a solvent that uniformly mixes with a solvent to be used for dissolution. Here, the term "uniformly mixes with a solvent" means that when two or more solvents are mixed, an interface does not appear even after the mixture is left standing for 1 day. Examples of the solvent that uniformly mixes with water may include NMP, DMF, DMAc, acetone, DMSO, tetrahydrofuran, acetonitrile, methanol and ethanol.

As the poor solvent for the fluororesin, a single solvent may be used, or two or more solvents may be used in combination as long as the poor solvent uniformly mixes with a solvent to be used for dissolution, but it is preferable to use a mixed solvent containing water, such as a mixed solvent of water and an alcohol or water and a nitrile particularly because particles that are minute and uniform in particle size are easily obtained.

The use amount of the poor solvent for the fluororesin is not particularly limited, but it may be, for example, 0.1 parts by mass or more and 100 parts by mass or less, and is preferably 0.1 parts by mass or more and 50 parts by mass or less, further preferably 0.1 parts by mass or more and 10 parts by mass or less based on 1 part by mass of a solvent to be used for dissolution.

When the fluororesin solution is added in the poor solvent for the fluororesin, the reception tank temperature can be set to a temperature of not lower than 0°C and not higher than the boiling point of the solvent, but depending on a solvent to be used, particles may not be obtained because fusion of particles occurs, and therefore the temperature immediately before addition of the fluororesin solution is preferably 0°C or higher and 40°C or lower. The addition of the fluororesin solution causes fluororesin fine particles to be precipitated from the fluororesin solution, so that a liquid with fluororesin fine particles dispersed or suspended therein is obtained. Preferably, the poor solvent for the fluororesin is stirred in addition of the fluororesin solution.

In the step a2, the dissolved fluororesin solution is flash-crystallized to precipitate fluororesin fine particles. That is, a flash crystallization method is used in the method in which a fluororesin solution is added to a poor solvent.

The flash crystallization is a method in which a fluororesin solution is rapidly solidified/crystallized, more specifically a method in which the solution under heating and pressurization is ejected through a nozzle and transferred into another vessel (hereinafter, sometimes referred to as a reception tank) at a temperature equal to or lower than the boiling point of a solvent used for dissolution (may be equal to or lower than normal temperature) and at a pressure equal to or lower than a pressure at which the solution is pressurized (may be under reduced pressure), so that the solution is crystallized, or the solution under pressurization is ejected through a nozzle and transferred into another vessel (hereinafter, sometimes referred to as a reception tank) at a pressure equal to or lower than a pressure at which the solution is pressurized (may be under reduced pressure), so that the solution is crystallized.

Preferably, the fluororesin solution is ejected into the poor solvent at the time when flash crystallization is performed. Preferably, the fluororesin solution is flashed while the tip of a nozzle through which the fluororesin solution is ejected is held in the poor solvent on the reception tank side, but the fluororesin solution may be flashed into the poor, solvent through a gas phase with the nozzle tip separated from the poor solvent.

Specifically, it is preferable to perform flash crystallization by ejecting the fluororesin solution to the reception tank under atmospheric pressure (may be under reduced pressure) from a vessel kept under heating and pressurization or under pressurization. When heating/dissolution is performed in a heat-resistant vessel such as an autoclave, for example, in the dissolution step, the inside of the vessel is brought into a pressurized state by a self-generated pressure due to heating (may be further pressurized with an inert gas such as nitrogen). When in this state, the pressure is released into the reception tank under atmospheric pressure, flash crystallization can be further easily and conveniently performed. When the fluororesin is dissolved at normal temperature, fluororesin fine particles can be obtained by pressurizing the dissolution tank to a certain pressure, and flash-crystallizing the solution into the poor solvent for the fluororesin.

The poor solvent to be used when the fluororesin solution is flash-crystallized into the poor solvent is not particularly limited, and one similar to the poor solvent described in the step a1 can be used.

The use amount of the poor solvent for the fluororesin is not particularly limited, but it may be, for example, 0.1 parts by mass or more and 100 parts by mass or less, and is preferably 0.2 parts by mass or more and 50 parts by mass or less, further preferably 0.3 parts by mass or more and 10 parts by mass or less based on 1 part by mass of a solvent used for dissolution.

For operating conditions during flash crystallization, a method can be employed in which a solution with a fluororesin dissolved normally at normal temperature to 200°C, preferably at normal temperature to 100°C is flash-crystallized in a single stage in a vessel at a pressure equal to or lower than a pressure at which the solution is pressurized, the pressure being in a range as described later, or under reduced pressure, or the solution is flash-crystallized in multiple stages in a vessel at a pressure lower than that of the inside of the tank containing the solution. Specifically, when heating/dissolution is performed in a heat-resistant vessel such as an autoclave, for example, in the dissolution step, the inside of the vessel is brought into a pressurized state by a self-generated pressure due to heating (may be further pressurized with an inert gas such as nitrogen). The solution in a pressurized state is flashed to a reception tank under atmospheric pressure or under reduced pressure, the reception tank containing a poor solvent for the fluororesin. When the fluororesin is dissolved without being heated in a pressure-resistant vessel such as an autoclave, the solution pressurized to a certain pressure and thereby brought into a pressurized state is flashed to a reception tank under atmospheric pressure or under reduced pressure, the reception tank containing a poor solvent for the fluororesin. The pressure (gauge pressure) of the solution to be flash-crystallized is preferably 0.2 MPa or more and 4 MPa or less. Preferably, the solution in this environment is flash-crystallized to a reception tank under atmospheric pressure.

The temperature of the reception tank varies depending on the poor solvent for the fluororesin, which is added in the reception tank, but it is preferably a temperature which does not cause solidification of the poor solvent for the fluororesin and which is not higher than 50°C. Specifically, in the case of water, the temperature of the reception tank is preferably 0°C to 50°C as a temperature immediately before flash crystallization.

In the flash crystallization method, a connection tube outlet from the dissolution tank is placed in the air or the poor solvent for the fluororesin in the reception tank, and flash crystallization is performed, and it is preferable that the connection tube outlet is placed in the poor solvent because more minute fluororesin fine particles are obtained.

Fluororesin fine particles prepared in the precipitation step (step a1), or particularly (step a2), can be obtained in the form of a dispersion liquid or a suspension liquid. When coarse particles such as an undissolved part of the added fluororesin are contained, these coarse particles can be removed by filtration etc.

By employing the method of this embodiment, fluororesin fine particles that are minute and uniform in particle size can be stably produced. By using fluororesin fine particles, particularly vinylidene fluoride-based resin fine particles composed of a copolymer of vinylidene fluoride and hexafluoropropylene, adhesion between the porous base material' and the porous layer can be improved without reducing the air permeability.

Examples of the phase separation method include a method in which an organic resin is dissolved in a solvent, and the organic resin solution is emulsified using a nonsolvent, and brought into contact with a poor solvent to form organic resin fine particles. Examples of the dry grinding method include a method in which organic resin fine particles are mutually collided to grind the particles, and a method in which organic resin fine particles are collided against a metallic wall to grind the particles. Examples of the wet grinding method include a method in which beads of zirconia etc. are added to a dispersion medium with organic resin fine particles dispersed therein, and the dispersion medium is stirred, so that beads are collided against the organic resin fine particles to grind the particles. The material and bead diameter of the beads can be matched to the shape and size of intended organic resin fine particles.

Examples of the spray dryer method include a method in which an organic resin is dissolved in a solvent, the resulting solution is sprayed through a nozzle to prepare droplets, and the droplets are dried to be formed into fine particles. The solvent to be used in the spray dryer method is not particularly limited as long as it dissolves an organic resin, but a solvent having a boiling point lower than the melting point of the organic resin is preferable, and specific examples thereof include acetone, methyl ethyl ketone, methyl isobutyl ketone, methanol, ethanol, 1-propanol, 2-propanol, 1-butanol, ethyl acetate, propyl acetate, butyl acetate, tetrahydrofuran and cyclohexanone.

### (Binder)

For binding the organic resin fine particles together, or with the porous base material, a binder may be used if necessary. Adhesiveness with an electrode may be improved by adding a binder.

Examples of the resin to be used in the binder include fluororesins, acrylic resins, styrene-butadiene resins, crosslinked polystyrenes, methyl methacrylate-styrene copolymers, polyimides, melamine resins, phenol resins, polyacrylonitriles, silicon resins, polycarbonates and carboxymethylcellulose resins, and these resins may be used alone, or may be used in combination of two or more thereof. Among the above-mentioned binder resins, fluororesins, acrylic resins, styrene-butadiene resins and carboxymethylcellulose resins are especially preferably used from the viewpoint of electric stability and oxidation resistance.

The binder to be used may be a binder soluble in a solvent, or a particulate binder, and the form thereof is not particularly limited, but a particulate binder is preferable in formation of a porous structure. The particulate binder may be one that partially or totally forms a film during formation of a porous layer, or may be one that does not form a film. As a method for causing a particulate binder to form a film, the binder may be caused to form a film by heat in drying of a solvent, or the binder may be caused to form a film by adding a film formation promoting agent such as N-methyl-2-pyrrolidone, dimethylacetamide, dipropylene glycol methyl ether, butyl glycol, propylene glycol or 2,2,4-trimethyl-1,3-pentanediol monoisobutylate.

The average particle size of the particulate binder is preferably 1 µm or less. When the average particle size is more than 1 µm, battery performance may be deteriorated because the amount of the binder necessary for binding organic resin fine particles to the porous base material increases.

The content of the binder relative to organic resin fine particles is preferably 100 parts by mass or less, more preferably 80 parts by mass or less, further preferably 70 parts by mass or less based on 100 parts by mass of organic resin fine particles. The content of the binder is preferably 1 part by mass or more, more preferably 2 parts by mass or more, further preferably 5 parts by mass or more based on 100 parts by mass of organic resin fine particles. When the content of the binder is more than 100 parts by mass, the content of organic resin fine particles decreases, so that the contact area between the electrode and the organic resin fine particles may decrease, leading to deterioration of adhesiveness. Further, the air permeability may significantly increase to deteriorate electric characteristics. When the content of the binder is less than 1 part by mass, adhesiveness is hard to be exhibited, so that organic resin fine particles stacked on the porous base material may be detached to make it difficult to form a porous layer.

### (Formation of porous layer)

The secondary battery separator of the present invention is obtained by stacking on at least one surface of a porous base material a porous layer containing the above-defined organic resin fine particles, and the method for this will be described below.
Organic resin fine particles produced by a known method such as emulsification polymerization, suspension polymerization or dispersion polymerization, or organic resin fine particles processed so as to have an intended average particle size and shape after polymerization are dispersed in a solvent to prepare a coating liquid. Here, the solvent in which organic resin fine particles are dispersed is preferably a solvent mainly composed of water for inhibiting the porous base material from being impregnated with the solvent. Here, the term "mainly composed of water" means that 50% by mass or more of water is contained in 100% by mass of a solvent.

The ratio of water to the solvent mainly composed of water is preferably 50% by mass or more, more preferably 60% by mass or more, further preferably 70% by mass or more. When the ratio of water is less than 50% by mass, the porous base material may be impregnated with a coating liquid in application of the coating liquid to the base material to make it unable to form a desired porous layer. When the porous base material is impregnated with a coating liquid, it may be difficult to convey the porous base material, leading to generation of creases during conveyance.

When organic resin fine particles are dispersed, a dispersant may be used if necessary. The type of the dispersant is not particularly limited, and examples of the dispersant include cationic surfactants such as alkyl amine salts and quaternary ammonium salts; anionic surfactants such as alkyl sulfuric acid ester salts, polyoxyethylene alkyl ether sulfuric acid ester salts, alkyl benzenesulfonic acid salts and fatty acid salts; nonionic surfactants such as polyoxyethylene alkyl ethers, polyoxyethylene alkyl phenols, glycerin fatty acid esters and polyoxyethylene fatty acid esters; amphoteric surfactants such as alkylbetaines and alkylamine oxides; and cationic, anionic, nonionic and amphoteric fluorine-based surfactants and silicon-based surfactants. These surfactants may be used alone, or may be used in combination of two or more thereof. The added amount of the surfactant is preferably 0.1 parts by mass or more and 40 parts by mass or less, more preferably 0.5 parts by mass or more and 30 parts by mass or less, further preferably 1 part by mass or more and 20 parts by mass or less based on 100 parts by mass of organic resin fine particles to be dispersed. When the added amount of the surfactant is more than 40 parts by mass, the content of organic resin fine particles relative to the porous layer may decrease, leading to deterioration of adhesiveness.

As a method for dispersing organic resin fine particles, a known method may be used, and examples thereof include methods using a ball mill, a bead mill, a sand mill, a roll mill, a homogenizer, an ultrasonic homogenizer, a high-pressure homogenizer, an ultrasonic apparatus, a paint shaker or the like. Two or more of these mixing and dispersing machines may be combined to perform dispersion in stages.

The order of preparing a coating liquid is not particularly limited, but for improving the efficiency of the dispersion step, a surfactant as a dispersant is added to and mixed with a solvent mainly composed of water, and organic resin fine particles are added in the solution. For binding the organic resin fine particles together, or with the porous base material, the binder may be added if necessary.

For improving the heat resistance of the porous layer, inorganic fine particles of aluminum oxide, boehmite, silica, titanium oxide, zirconium oxide, iron oxide, magnesium oxide or the like may be added to the coating liquid. Here, the added amount of inorganic fine particles is preferably less than 30% by volume based on the amount of organic resin fine particles. When 30% by volume or more of inorganic fine particles are added, sufficient adhesiveness may not be obtained. An antioxidant, a stabilizer, an antifoaming agent, a levelling agent and the like may be appropriately added if necessary.

Next, the obtained coating liquid is applied onto the porous base material, and dried to stack a porous layer. As a coating method, the coating liquid may be applied by a known method, and for example, gravure coating, slit die coating, knife coating, kiss coating, roll coating, bar coating, spray coating, immersion coating, spin coating, screen printing, inkjet printing, pat printing and other types of printing can be used, but the coating method is not limited thereto, and a coating method may be selected in accordance with preferred conditions for organic resin fine particles, a binder and a surfactant to be used, and a solvent and a base material to be used. For improving coatability, for example, the coating surface may be subjected to a surface treatment such as a corona treatment or a plasma treatment.

When the porous layer is to be stacked on both surfaces of the porous base material, one surface may be coated and dried, followed by coating and drying the other surface, but it is more preferable to coat and dry both surfaces at the same time from the viewpoint of high productivity. From the viewpoint of adhesiveness, it is more preferable to stack the porous layer on both surfaces than on only one surface because adhesiveness is secured on both positive electrode and negative electrode sides, resulting in excellent cycle performance. When a heat-resistant layer is necessary, the heat-resistant layer may be stacked on the porous base material, followed by stacking the porous layer, or a coating method for stacking the heat-resistant layer and the porous layer at the same time may be used.

The thickness of the porous layer is 0.10 µm or more and less than 2.5 µm. The thickness of the porous layer is more preferably 0.5 µm or more and less than 2.0 µm. When the thickness of the porous layer is less than 0.10 µm, sufficient adhesiveness with an electrode may not be obtained. When the' thickness of the porous layer is 2.5 µm or more, the air permeability may significantly increase, or adhesiveness may not be sufficient. When the porous layer is stacked on only one surface, the separator may be significantly curved, and for this reason, it is preferable to stack the porous layer on both surfaces of the porous base material. When the porous layer is stacked on both surfaces, the difference in thickness between the porous layers on the surfaces is preferably 1 µm or less for the same reason as described above.

The air permeability increases by a factor of preferably 5 or less, more preferably 3 or less as a result of stacking the porous layer. When the air permeability increases by a factor of more than 5 as a result of stacking the porous layer, the air permeability of the secondary battery separator as a whole also increases, so that sufficient ion movability is not obtained, and thus battery characteristics may be deteriorated.

### [Porous base material]

In the present invention, it is preferable that the porous base material is composed of a resin which is electrically insulating, electrically stable and stable to an electrolyte solution. The resin to be used for imparting a shutdown function is preferably a thermoplastic resin having a melting point of 200°C or lower. The shutdown function here is a function in which if abnormal heat generation occurs in a lithium ion battery, the material is melted by heat to close the porous structure, so that ion movement is stopped to stop power generation. Examples of the thermoplastic resin include polyolefin-based resins, and the porous base material is preferably a polyolefin-based porous base material having a melting point of 200°C or lower. Specific examples of the polyolefin-based resin include polyethylene, polypropylene, copolymers thereof, and mixtures obtained by combination thereof, and the porous base material is, for example, a monolayer porous base material containing 90% by mass or more of polyethylene, or a multilayer porous base material composed of polyethylene and polypropylene.

Examples of the method for producing the porous base material include a method in which a polyolefin-based resin is formed into a sheet, and the sheet is then made porous by stretching the sheet, and a method in which a polyolefin-based resin is dissolved in a solvent such as liquid paraffin, and formed into a sheet, and the sheet is then made porous by extracting the solvent.

The thickness of the porous base material is preferably 5 µm or more and 50 µm or less, more preferably 5 µm or more and 30 µm or less. When the thickness of the porous base material is more than 50 µm, the internal resistance of the porous base material may increase. When the thickness of the porous base material is less than 5 µm, production may be difficult, and sufficient dynamic characteristics may not be obtained.

The air permeability of the porous base material is preferably 50 seconds/100 cc or more and 1,000 seconds/100 cc or less. The air permeability of the porous base material is more preferably 50 seconds/100 cc or more and 500 seconds/100 cc or less. When the air permeability is more than 1,000 seconds/100 cc, sufficient ion movability is not obtained, and thus battery characteristics may be deteriorated. When the air permeability is less than 50 seconds/100 cc, sufficient dynamic characteristics may not be obtained.

### [Heat-resistant layer]

It is preferable to stack a heat-resistant layer between the porous base material and the porous layer for improving the dimensional stability of the secondary battery separator. The secondary battery separator is required to have heat resistance which ensures that the thermal shrinkage is 10% or less at 150°C. The heat-resistant layer contains heat-resistant fine particles, and the heat-resistant fine particles are required to be electrically stable in a battery, and have electrically insulating quality and heat resistance. When these characteristics are satisfied, either inorganic fine particles or organic resin fine particles, or other fine particles can be used as heat-resistant fine particles.

Specific examples of the inorganic fine particles include inorganic fine particles such as inorganic oxide fine particles such as those of aluminum oxide, boehmite, silica, titanium oxide, zirconium oxide, iron oxide and magnesium oxide, inorganic nitride fine particles such as those of aluminum nitride and silicone nitride and hardly soluble ionic crystal particles such as those of calcium fluoride, barium fluoride and barium sulfate; and organic resin fine particles such as those of polyvinylidene fluoride, crosslinked polymethyl methacrylate, crosslinked polystyrene, methyl methacrylate-styrene copolymers, polyimide, melamine resin, phenol resin, polyacrylonitrile. One type of these fine particles may be used, or two or more types thereof may be used in combination.

The average particle size of fine particles to be used is preferably 0.1 µm or more and 5 µm or less. When the average particle size is less than 0.1 µm, the functional porous layer may be densified to increase the air permeability. The pore diameter decreases, so that the impregnation property of the electrolyte solution may be reduced to affect productivity.

Examples of the shape of fine particles to be used include a spherical shape, a tabular shape, an acicular shape, a rod shape and an elliptic shape, and the fine particles may have any of these shapes. Among them, a spherical shape is preferable from the viewpoint of surface modification property, dispersibility and coatability.

The thickness of the heat-resistant layer is preferably 0.5 µm or more and 10 µm or less. The thickness of the heat-resistant layer is more preferably 1 µm or more and 5 µm or less. When the thickness of the heat-resistant layer is less than 0.5 µm, sufficient heat resistance may not be obtained. When the thickness of the heat-resistant layer is more than 10 µm, the air permeability may significantly increase. There is no limitation on whether the heat-resistant layer exists on only one surface or both surfaces of the porous base material.

### [Secondary battery separator]

The secondary battery separator of the present invention is a secondary battery separator including: a porous base material; and a porous layer stacked on at least one surface of the porous base material and containing organic resin fine particles as described above. Preferably, the stacked porous layer is made sufficiently porous for securing ion permeability, and the air permeability of the secondary battery separator is 50 seconds/100 cc or more and 1,000 seconds/100 cc or less. The air permeability of the porous base material is more preferably 50 seconds/100 cc or more and 500 seconds/100 cc or less. When the air permeability is more than 1,000 seconds/100 cc, sufficient ion movability is not obtained, and thus battery characteristics may be deteriorated. When the air permeability is less than 50 seconds/100 cc, sufficient dynamic characteristics may not be obtained.

### [Secondary battery]

The secondary battery separator of the present invention can be suitably used in a secondary battery such as a lithium ion battery. A lithium ion battery has a configuration in which a secondary battery separator and an electrolyte are interposed between a positive electrode with a positive active material stacked on a positive electrode current collector and a negative electrode with a negative active material stacked on a negative electrode current collector.

The positive electrode includes a current collector, and a positive electrode agent stacked on the current collector, the positive electrode agent including an active material, a binder resin and a conduction promoting agent. Examples of the active material include lithium-containing transition metal oxides having a layered structure, such as LiCoO₂, LiNiO₂ and Li(NiCoMn)O₂; spinel type manganese oxides such as LiMn₂O₄; and iron-based compounds such as LiFePO₄. As the binder resin, a resin having high oxidation resistance may be used, and specific examples thereof include fluororesins, acrylic resins and styrene-butadiene resins. As the conduction promoting agent, 'a carbon material such as carbon black or graphite is used. As the current collector, a metal foil is suitable, and particularly, aluminum is often used.

The negative electrode includes a current collector, and a negative electrode agent stacked on the current collector, the negative electrode agent including an active material and a binder resin. Examples of the active material include carbon materials such as artificial graphite, natural graphite, hard carbon and soft carbon; lithium alloy-based materials of tin, silicon and the like; metal materials such as Li; and lithium titanate (Li₄Ti₅O₁₂). As the binder resin, a fluororesin, an acrylic resin, a styrene-butadiene resin or the like is used. As the current collector, a metal foil is suitable, and particularly, a copper foil is often used.

The electrolyte solution provides a field where ions are moved between the positive electrode and the negative electrode in the secondary battery. The electrolyte solution has a configuration in which an electrolyte is dissolved in an organic solvent. Examples of the electrolyte include LiPF₆, LiBF₄ and LiClO₄, and LiPF₆ is suitably used from the viewpoint of solubility in an organic solvent, and ionic conductivity. Examples of the organic solvent include ethylene carbonate, propylene carbonate, fluoroethylene carbonate, dimethyl carbonate, diethyl carbonate, ethylmethyl carbonate, gamma-butyrolactone and sulfolane, and these organic solvents may be used in combination of two or more thereof.

As a method for preparing the secondary battery, first an active material and a conduction promoting agent are dispersed in a binder solution to prepare a coating liquid for an electrode, and the coating liquid is applied onto a current collector, and the solvent is dried to obtain a positive electrode and a negative electrode, respectively. The thickness of the coating film after drying is preferably 50 µm or more and 500 µm or less. A secondary battery separator is disposed between the obtained positive electrode and negative electrode in such a manner that the separator is in contact with the active material layer of each electrode, they are enclosed in a packaging material such as an aluminum laminated film, and hot pressing is performed, followed by injecting an electrolyte solution. Alternatively, an electrolyte solution may be injected, followed by performing hot pressing. Thereafter, a negative electrode lead and a safety valve are installed, and the packaging material is sealed. The secondary battery thus obtained is excellent in cycle performance because of high adhesiveness between the electrodes and the secondary battery separator, and can be produced at a low cost.

### EXAMPLES

Hereinafter, the present invention will be described in detail by way of examples, but the present invention is not limited to these examples. The measurement methods used in examples will be shown below.

### [Measurement methods]

### (1) Average particle size of organic resin fine particles

The surface of a porous layer was observed at a magnification of 50,000 using a field emission type scanning electron microscope (S-3400N manufactured by Hitachi, Ltd.). The image size here is 2.5 µm × 1.8 µm. The number of pixels was 1,280 × 960, and the size of one pixel was 2.0 nm × 1.9 nm.

For the average particle size, a square or rectangle completely surrounding one particle with the smallest area, i.e. a square or rectangle with the edge of a particle being in contact with four sides of the square or rectangle, was drawn on the obtained image, and the length of one side was defined as the particle size of the organic resin fine particle in the case of a square, and the length of the long side (major axis diameter) was defined as the particle size of the organic resin fine particle in the case of a rectangle. The particle size was measured for random 100 particles, and the number average thereof was defined as the average particle size of the organic resin fine particles. In the case where 100 or more particles were observed in the photographed image, the number average of the particle sizes of random 100 particles in the image was defined as the average particle size, and in the case where the number of particles observed in the image was less than 100, a plurality of images were photographed, and the number average of the particle sizes of total 100 particles was defined as the average particle size.

### (2) Thickness of porous layer

A sample section was cut out using a microtome, the section was observed with a field emission type scanning electron microscope (S-3400N manufactured by Hitachi, Ltd.), and the thickness of the porous layer at the highest point from the interface with the porous base material was measured as the thickness of the porous layer. The thickness was measured for each of random five spots in a sample having a size of 100 mm × 100 mm, and an average was calculated.

### (3) Air permeability

One spot was randomly selected from each of three samples having a size of 100 mm × 100 mm, the air permeability was measured in accordance with JIS P 8117 (2009) using an Oken type air permeability measurement apparatus (EG01-5-1MR manufactured by ASAHI SEIKO CO. , LTD.), and the average thereof was defined as the air permeability (seconds/100 cc).

### (4) Adhesive strength

A solvent with diethyl carbonate and ethylene carbonate mixed at a mass ratio of 7 : 3 was prepared, a secondary battery separator film (15 mm × 100 mm) prepared in each of the following examples, and a positive electrode (15 mm × 100 mm) including LiCoO₂ as an active material, a vinylidene fluoride resin as a binder, and carbon black as a conduction promoting agent were immersed in the solvent for 10 minutes, taken out, and then arranged in such a manner that the active material and the porous layer were in contact with each other, thermal pressing was performed at 0.5 MPa and 80°C for 2 minutes using a thermal pressing machine, the positive electrode and the secondary battery separator film were manually separated from each other using a pair of tweezers, and the adhesive strength was evaluated on the following four grades. Similarly, the adhesive strength between the secondary battery separator and a negative electrode including graphite as an active material, a vinylidene fluoride resin as a binder, and carbon black as a conduction promoting agent was measured, and evaluation was performed for each of the positive electrode and the negative electrode to determine the adhesive strength.
- Adhesive strength S: after peeling, the active material of the electrode was partially deposited on the secondary battery separator side.
- Adhesive strength A: the electrode and the second battery separator were separated from each other with a slightly strong force.
- Adhesive strength B: the electrode and the second battery separator were separated from each other with a weak force.
- Adhesive strength C: the electrode and the second battery separator were separated from each other with an extremely weak force.

### (Example 1)

A resin composed of a copolymer of vinylidene fluoride and hexafluoropropylene (hereinafter, referred to as a vinylidene fluoride-based resin; weight average molecular weight: 1,000,000) was dissolved at 80°C in 9, 000 parts by mass of acetonitrile based on 100 parts by mass of the copolymer, and to the resulting solution was added 11 parts by mass of water based on 100 parts by mass of acetonitrile to prepare a vinylidene fluoride-based resin solution. The vinylidene fluoride-based resin solution at 76°C was continuously added to a water tank (normal temperature), and to the mixed liquid was then added 100 parts by mass of a 10 mass% aqueous magnesium acetate solution based on 100 parts by mass of the vinylidene fluoride-based resin to aggregate vinylidene fluoride-based resin fine particles. The mixture was filtered by a membrane filter, and washed with water to obtain a water-containing wet cake of the vinylidene fluoride-based resin fine particles (solid concentration of vinylidene fluoride-based resin fine particles: 25.6% by mass).

A nonionic polyoxyethylene alkyl ether (15 parts by mass) as a surfactant was added based on 100 parts by mass of the vinylidene fluoride-based resin fine particles of the water-containing wet cake, 374 parts by mass of ion-exchanged water was then added, and the mixture was predispersed using a homomixer. The predispersion liquid was treated with an ultrasonic wave (power: 120 W), and coarse particles were then separated by centrifugal sedimentation to obtain a water dispersion liquid including vinylidene fluoride-based resin fine particles having an average particle size of 0.10 µm.

To the vinylidene fluoride-based resin fine particle water dispersion liquid was added 10 parts by mass of an acrylic resin ("Polysol" (registered trademark) LB manufactured by Showa Denko K.K.) as a binder based on 100 parts by mass of vinylidene fluoride-based resin fine particles to prepare a coating liquid. The content of the vinylidene fluoride-based resin fine particles in the porous layer was 77% by mass. This coating liquid was applied by gravure coating to both surfaces of a polyethylene porous base material (thickness: 9 µm, air permeability: 200 seconds/100 cc) with a heat-resistant layer stacked on one surface thereof, and was dried until the contained solvent was volatilized, so that a porous layer was formed to obtain a secondary battery separator of the present invention. The results of measuring the average particle size of vinylidene fluoride-based fine particles, the thickness of the porous layer, the air permeability and the adhesive strength for the obtained secondary battery separator are shown in Table 1. The results of making these measurements for the following examples and comparative examples are also shown in Table 1.

### (Example 2)

Except that 40 parts by mass of an acrylic resin (manufactured by Showa Denko K.K.) was added as a binder based on 100 parts by mass of vinylidene fluoride-based resin fine particles, the same procedure as in Example 1 was carried out to obtain a secondary battery separator of the present invention.

### (Example 3)

Except that vinylidene fluoride-based resin fine particles having an average particle size of 0.05 µm were used, and 100 parts by mass of carboxymethylcellulose (weight average molecular weight: 400,000) was added as a binder based on 100 parts by mass of the vinylidene fluoride-based resin fine particles to prepare a coating liquid, the same procedure as in Example 1 was carried out to obtain a secondary battery separator of the present invention.

### (Example 4)

Except that vinylidene fluoride-based resin fine particles having an average particle size of 0. 15 µm were used, and the thickness of the porous layer was 0.3 µm, the same procedure as in Example 1 was carried out to obtain a secondary battery separator of the present invention.

### (Example 5)

Except that vinylidene fluoride-based resin fine particles having an average particle size of 0. 20 µm were used, and the thickness of the porous layer was 2.3 µm, the same procedure as in Example 1 was carried out to obtain a secondary battery separator of the present invention.

### (Example 6)

Except that a vinylidene fluoride-based resin fine particle water dispersion liquid produced without adding a surfactant (nonionic polyoxyethylene alkyl ether) during production of the vinylidene fluoride-based resin fine particle water dispersion liquid was used, and 20 parts by mass of an acrylic resin ("Polysol" (registered trademark) LB manufactured by Showa Denko K.K.) was added as a binder based on 100 parts by mass of vinylidene fluoride-based resin fine particles, the same procedure as in Example 1 was carried out to obtain a secondary battery separator of the present invention.

### (Reference¹ Example 7)

¹Reference Example is outside the scope of the invention

Except that an organic resin fine particle dispersion liquid in which an acrylic resin having an average particle size of 0. 35 µm was dispersed in water was used, and 10 parts by mass of an acrylic resin ("Polysol" (registered trademark) LB manufactured by Showa Denko K.K.) was added as a binder based on 100 parts by mass of acrylic resin fine particles, the same procedure as in Example 1 was carried out to obtain a secondary battery separator of the present invention.

### (Example 8)

Except that 10 parts by mass of a nonionic polyoxyethylene alkyl ether was added as a surfactant based on 100 parts by mass of vinylidene fluoride-based resin fine particles during production of a vinylidene fluoride-based resin fine particle water dispersion liquid, the same procedure as in Example 1 was carried out to obtain a secondary battery separator of the present invention.

### (Example 9)

Except that 20 parts by mass of an acrylic resin ("Polysol" (registered trademark) LB manufactured by Showa Denko K.K.) was added as a binder based on 100 parts by mass of vinylidene fluoride-based resin fine particles, the same procedure as in Example 1 was carried out to obtain a secondary battery separator of the present invention.

### (Example 10)

Except that in place of the surfactant (nonionic polyoxyethylene alkyl ether), 5 parts by mass of polyvinyl pyrrolidone was added based on 100 parts by mass of vinylidene fluoride-based resin fine particles during production of a vinylidene fluoride-based resin fine particle water dispersion liquid, the same procedure as in Example 1 was carried out to obtain a secondary battery separator of the present invention.

### (Example 11)

A vinylidene fluoride-based resin was dissolved at 80°C in 9,000 parts by mass of acetonitrile based on 100 parts by mass of the copolymer, and to the resulting solution was added 11 parts by mass of water based on 100 parts by mass of acetonitrile to prepare a vinylidene fluoride-based resin solution. The vinylidene fluoride-based resin solution at 76°C was continuously added to a tank containing a mixed liquid of normal-temperature water (9,500 parts by mass based on 100 parts by mass of the vinylidene fluoride-based resin) and acetonitrile (500 parts by mass based on 100 parts by mass of the vinylidene fluoride-based resin), so that a particle-forming liquid was obtained. The acetonitrile was removed from the particle-forming liquid, and 3 parts by mass of a nonionic polyoxyethylene alkyl ether as a surfactant and 2 parts by mass of polyvinyl pyrrolidone were added based on 100 parts by mass of vinylidene fluoride-based resin fine
particles, 374 parts by mass of ion-exchanged water was then added, and the mixture was predispersed using a homomixer. The predispersion liquid was treated with an ultrasonic wave (power: 120 W), and coarse particles were then separated by centrifugal sedimentation to obtain a water dispersion liquid including vinylidene fluoride-based resin fine particles having an average particle size of 0.1 µm.

To the vinylidene fluoride-based resin fine particle water dispersion liquid was added 10 parts by mass of an acrylic resin ("Cogum" (registered trademark) manufactured by Showa Denko K.K.) as a binder based on 100 parts by mass of vinylidene fluoride-based resin fine particles to prepare a coating liquid.

Except that the above-mentioned coating liquid was used, the same procedure as in Example 1 was carried out to obtain a secondary battery separator of the present invention.

### (Example 12)

A vinylidene fluoride-based resin was dissolved at 80°C in 9,000 parts by mass of acetonitrile based on 100 parts by mass of the copolymer, and to the resulting solution was added 11 parts by mass of water based on 100 parts by mass of acetonitrile to prepare a vinylidene fluoride-based resin solution. The vinylidene fluoride-based resin solution at 76°C was continuously added to a tank containing 5, 000 parts by mass of normal-temperature water based on 100 parts by mass of the copolymer, so that a particle-forming liquid was obtained.

Next, a separately prepared vinylidene fluoride-based resin solution (76°C), and 5, 000 parts by mass of water (normal temperature) based on 100 parts by mass of the copolymer were simultaneously added dropwise to the water tank each at a rate which allowed the dropwise addition to be completed in 6 minutes, and at the same time, a particle-forming liquid was discharged from the bottom of the particle-forming tank in such a manner that the liquid level of the particle-forming liquid was maintained (particle-forming liquid A). Subsequently, a separately prepared vinylidene fluoride-based resin solution (76°C), and 5,000 parts by mass of water (normal temperature) based on 100 parts by mass of the copolymer were simultaneously added dropwise to the water tank each at a rate which allowed the dropwise addition to be completed in 6 minutes, and at the same time, a particle-forming liquid was discharged from the bottom of the particle-forming tank in such a manner that the liquid level of the particle-forming liquid was maintained (particle-forming liquid B) .

The acetonitrile was removed from the particle-forming liquid A, the particle-forming liquid B, and a particle-forming liquid C remaining in the water tank, 3 parts by mass of a nonionic polyoxyethylene alkyl ether as a surfactant and 2 parts by mass of polyvinyl pyrrolidone were added based on 100 parts by mass of vinylidene fluoride-based resin fine particles, 374 parts by mass of ion-exchanged water was then added, and the mixture was predispersed using a homomixer. The predispersion liquid was treated with an ultrasonic wave (power: 120 W), and coarse particles were then separated by centrifugal sedimentation to obtain a water dispersion liquid including vinylidene fluoride-based resin fine particles having an average particle size of 0.1 µm.

To the vinylidene fluoride-based resin fine particle water dispersion liquid was added 10 parts by mass of an acrylic resin ("Cogum" (registered trademark) manufactured by Showa Denko K.K.) as a binder based on 100 parts by mass of vinylidene fluoride-based resin fine particles to prepare a coating liquid.

Except that the above-mentioned coating liquid was used, the same procedure as in Example 1 was carried out to obtain a secondary battery separator of the present invention.

### (Comparative Example 1)

Except that the thickness of the porous layer was 0.05 µm, the same procedure as in Example 1 was carried out to obtain a secondary battery separator of the present invention.

### (Comparative Example 2)

Except that the thickness of the porous layer was 4.0 µm, the same procedure as in Example 1 was carried out to obtain a secondary battery separator of the present invention.

### (Comparative Example 3)

Except that a dispersion liquid in which acrylic resin particles having an average particle size of 0.35 µm were dispersed was used, and the thickness of the porous layer was 4.0 µm, the same procedure as in Example 7 was carried out to obtain a secondary battery separator of the present invention.

**[Table 1]**

| | Type of organic resin | Average particle size of organic resin fine particles (µm) | Content of organic resin fine particles in porous layer (% by mass) | Amount of binder based on 100 parts by mass of organic resin fine particles (parts by mass) | Thickness of porous layer | Air permeability (seconds/ 100 cc) | Adhesive strength |
|---|---|---|---|---|---|---|---|
| Example 1 | Fluororesin | 0.10 | 77 | 10 | 1.0 | 300 | s |
| Example 2 | Fluororesin | 0.10 | 63 | 40 | 1.0 | 400 | s |
| Example 3 | Fluororesin | 0.05 | 45 | 100 | 1.0 | 800 | B |
| Example 4 | Fluororesin | 0.15 | 77 | 10 | 0.3 | 250 | A |
| Example 5 | Fluororesin | 0.20 | 77 | 10 | 2.3 | 900 | A |
| Example 6 | Fluororesin | 0.10 | 83 | 20 | 1.0 | 250 | s |
| Reference Example 7 | Acrylic resin | 0.35 | 91 | 10 | 1.0 | 220 | A |
| Example 8 | Fluororesin | 0.10 | 83 | 10 | 1.0 | 280 | s |
| Example 9 | Fluororesin | 0.10 | 77 | 20 | 1.0 | 300 | s |
| Example 10 | Fluororesin | 0.10 | 87 | 10 | 1.'0 | 250 | s |
| Example 11 | Fluororesin | 0.10 | 77 | 10 | 1.0 | 200 | s |
| Example 12 | Fluororesin | 0.10 | 77 | 10 | 1.0 | 200 | S |
| Comparative Example 1 | Fluororesin | 0.10 | 77 | 10 | 0.05 | 210 | C |
| Comparative Example 2 | Fluororesin | 0.10 | 77 | 10 | 4.0 | 2,000 | C |
| Comparative Example 3 | Acrylic resin | 0.35 | 91 | 10 | 4.0 | 1,500 | C |

From Table 1, it is apparent that in each of Examples 1 to 6, and Examples 8 to 12 of the present invention, the average particle size of organic resin fine particles is 0.02 µm or more and less than 0.40 µm, and the thickness of the porous layer is 0.10 µm or more and less than 2.5 µm, so that an increase in air permeability is suppressed, and a good adhesive, strength with an electrode is obtained.

On the other hand, in Comparative Example 1, the average particle size of organic resin fine particles is small, but the thickness of the porous layer is small, so that a desired adhesive strength is not obtained. In Comparative Examples 2 and 3, the average particle size of organic resin fine particles is small, but the thickness of the porous layer is large, so that the air permeability significantly increases, and the adhesive strength is not secured.

## Claims

1. A secondary battery separator including: a porous base material; and a porous layer stacked on at least one surface of the porous base material, the porous layer having a thickness of 0.10 µm or more and less than 2.5 µm, and organic resin fine particles having an average particle size of 0.02 µm or more and less than 0.40 µm,
**characterized in that**
the porous layer stacked on at least one surface of the porous base material contains the organic resin fine particles containing a fluororesin, the fluororesin having a weight average molecular weight of 600,000 or more and 1,500,000 or less.

2. The secondary battery separator according to claim 1, wherein the content of the organic resin fine particles in the porous layer is 50% by mass or more and less than 100% by mass.

3. The secondary battery separator according to claim 1 or 2, wherein the porous layer is stacked on both surfaces of the porous base material.

4. The secondary battery separator according to any one of claims 1 to 3, wherein the porous base material is a polyolefin-based porous base material.

5. The secondary battery separator according to any one of claims 1 to 4, comprising a heat-resistant layer between the porous base material and the porous layer.

6. The secondary battery separator according to any one of claims 1 to 5, wherein the porous layer contains a binder in an amount of 1 part by mass or more and 100 parts by mass or less based on 100 parts by mass of the organic resin fine particles.

7. The secondary battery separator according to any one of claims 1 to 6, wherein the organic resin fine particles are obtained by a method in which an organic resin is dissolved in a solvent, and the organic resin solution is added to a poor solvent to precipitate organic resin fine particles, the organic resin is a fluororesin, water is added to the organic resin solution, the amount of the added water is 1 to 25% by mass based on 100% by mass of the total of the solvent and water, and the amount of the fluororesin is 0.5 to 15 parts by mass based on 100 parts by mass of the total of the solvent and water.

8. The secondary battery separator according to claim 7, wherein the method in which the organic resin solution is added to a poor solvent is a flash crystallization method.

9. A secondary battery comprising the secondary battery separator according to any one of claims 1 to 8.

## Patentansprüche

1. Sekundärbatterieseparator, aufweisend: ein poröses Basismaterial; und eine poröse Schicht, die auf mindestens einer Oberfläche des porösen Basismaterials aufgeschichtet ist, wobei die poröse Schicht eine Dicke zwischen einschließlich 0,10 µm und weniger als 2,5 µm aufweist, und Feinpartikel aus organischem Harz, die eine durchschnittliche Teilchengröße zwischen einschließlich 0,02 µm und weniger als 0,40 µm aufweisen,
**dadurch gekennzeichnet, dass**
die poröse Schicht, die auf zumindest einer Oberfläche des porösen Basismaterials aufgeschichtet ist, die Feinpartikel aus organischem Harz enthält, die ein Fluorharz enthalten, wobei das Fluorharz ein gewichtsmittleres Molekulargewicht zwischen einschließlich 600.000 und einschließlich 1.500.000 aufweist.

2. Sekundärbatterieseparator nach Anspruch 1, wobei der Gehalt der Feinpartikel aus organischem Harz in der porösen Schicht zwischen einschließlich 50 Massen-% und weniger als 100 Massen-% beträgt.

3. Sekundärbatterieseparator nach Anspruch 1 oder 2, wobei die poröse Schicht auf beiden Oberflächen des porösen Basismaterials aufgeschichtet ist.

4. Sekundärbatterieseparator nach einem der Ansprüche 1 bis 3, wobei das poröse Basismaterial ein poröses Basismaterial auf Polyolefinbasis ist.

5. Sekundärbatterieseparator nach einem der Ansprüche 1 bis 4, umfassend eine hitzebeständige Schicht zwischen dem porösen Basismaterial und der porösen Schicht.

6. Sekundärbatterieseparator nach einem der Ansprüche 1 bis 5, wobei die poröse Schicht ein Bindemittel in einer Menge von zwischen einschließlich 1 Massenteil und einschließlich 100 Massenteilen enthält, bezogen auf 100 Massenteile von Feinpartikeln aus organischem Harz.

7. Sekundärbatterieseparator nach einem der Ansprüche 1 bis 6, wobei die Feinpartikel aus organischem Harz durch ein Verfahren erhalten werden, bei dem ein organisches Harz in einem Lösungsmittel gelöst wird und die organische Harzlösung zu einem schwachen Lösungsmittel hinzugefügt wird, um die Feinpartikel aus organischem Harz auszufällen, das organische Harz ein Fluorharz ist, Wasser zu der organischen Harzlösung hinzugefügt wird, die Menge des hinzugefügten Wassers 1 bis 25 Massen-%, bezogen auf 100 Massen-% der Gesamtmenge des Lösungsmittels und des Wassers, beträgt und die Menge des Fluorharzes 0,5 bis 15 Massenteile, bezogen auf 100 Massenteile der Gesamtmenge des Lösungsmittels und des Wassers, beträgt.

8. Sekundärbatterieseparator nach Anspruch 7, wobei das Verfahren, bei dem die organische Harzlösung einem schwachen Lösungsmittel zugesetzt wird, ein Schnellkristallisationsverfahren ist.

9. Sekundärbatterie, die den Sekundärbatterieseparator nach einem der Ansprüche 1 bis 8 umfasst.

## Revendications

1. Séparateur de batterie rechargeable comprenant : un matériau de base poreux ; et une couche poreuse empilée sur au moins une surface du matériau de base poreux, la couche poreuse ayant une épaisseur de 0,10 µm ou plus et inférieure à 2,5 µm, et des particules fines de résine organique ayant une taille de particule moyenne de 0,02 µm ou plus et inférieure à 0,40 µm,
**caractérisé en ce que**
la couche poreuse empilée sur au moins une surface du matériau de base poreux contient les particules fines de résine organique contenant une fluororésine, la fluororésine ayant un poids moléculaire moyen en poids de 600 000 ou plus et 1 500 000 ou moins.

2. Séparateur de batterie rechargeable selon la revendication 1, dans lequel la teneur des particules fines de résine organique dans la couche poreuse est de 50 % en masse ou plus et inférieure à 100 % en masse.

3. Séparateur de batterie rechargeable selon la revendication 1 ou 2, dans lequel la couche poreuse est empilée sur les deux surfaces du matériau de base poreux.

4. Séparateur de batterie rechargeable selon l'une quelconque des revendications 1 à 3, dans lequel le matériau de base poreux est un matériau de base poreux à base de polyoléfine.

5. Séparateur de batterie rechargeable selon l'une quelconque des revendications 1 à 4, comprenant une couche résistante à la chaleur entre le matériau de base poreux et la couche poreuse.

6. Séparateur de batterie rechargeable selon l'une quelconque des revendications 1 à 5, dans lequel la couche poreuse contient un liant en une quantité de 1 partie en masse ou plus et 100 parties en masse ou moins sur la base de 100 parties en masse des particules fines de résine organique.

7. Séparateur de batterie rechargeable selon l'une quelconque des revendications 1 à 6, dans lequel les particules fines de résine organique sont obtenues par un procédé dans lequel une résine organique est dissoute dans un solvant, et la solution de résine organique est ajoutée à un solvant faible pour précipiter les particules fines de résine organique, la résine organique est une fluororésine, de l'eau est ajoutée à la solution de résine organique, la quantité de l'eau ajoutée est de 1 à 25 % en masse sur la base de 100 % en masse du total du solvant et de l'eau, et la quantité de la fluororésine est de 0,5 à 15 parties en masse sur la base de 100 parties en masse du total du solvant et de l'eau.

8. Séparateur de batterie rechargeable selon la revendication 7, dans lequel le procédé dans lequel la solution de résine organique est ajoutée à un solvant faible est un procédé de cristallisation éclair.

9. Batterie rechargeable comprenant le séparateur de batterie rechargeable selon l'une quelconque des revendications 1 à 8.
